(19) Europäisches Patentamt
European Patent Office
Office européen des brevets

(11) Veröffentlichungsnummer: **0 019 848**
**B1**

(12) # EUROPÄISCHE PATENTSCHRIFT

(45) Veröffentlichungstag der Patentschrift: **25.07.84**

(51) Int. Cl.³: **C 08 G 69/26**

(21) Anmeldenummer: **80102828.3**

(22) Anmeldetag: **22.05.80**

(54) **Transparente Polyamide.**

(30) Priorität: **26.05.79 DE 2921495**

(43) Veröffentlichungstag der Anmeldung:
**10.12.80 Patentblatt 80/25**

(45) Bekanntmachung des Hinweises auf die Patenterteilung:
**25.07.84 Patentblatt 84/30**

(84) Benannte Vertragsstaaten:
**BE CH DE FR GB IT LI LU NL SE**

(56) Entgegenhaltungen:
**DE - A - 1 720 513**
**DE - A - 2 441 153**

(73) Patentinhaber: **CHEMISCHE WERKE HÜLS AG**
**Postfach 1320**
**D-4370 Marl 1 (DE)**

(72) Erfinder: **Brandt, Siegfried, Dr.**
**Grabenstrasse 8**
**D-4690 Herne 2 (DE)**
Erfinder: **Disteldorf, Josef, Dr.**
**Am Sengenhoff 2a**
**D-4690 Herne 1 (DE)**
Erfinder: **Haage, Hans-Jürgen**
**Gausstrasse 13**
**D-4690 Herne 2 (DE)**
Erfinder: **Hübel, Werner, Dr.**
**Birnenbruchstrasse 34**
**D-4690 Herne 1 (DE)**

(74) Vertreter: **Steil, Hanna, Dipl.-Chem. et al.**
**RSP PATENTE - PB 15 Postfach 1320**
**D-4370 Marl 1 (DE)**



Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft Copolyamide aus Terephthalsäure (TS) und/oder Isophthalsäure (IPS) bzw. deren Estern oder esterbildenden Derivaten und Diamingemischen aus 5-Methylnonamethylendiamin-1,9 (5—NMDA), gegebenenfalls in technischer Qualität, enthaltend isomere Diamine, und p,p'-Diaminodicyclohexylmethan bzw. Derivate davon.

Die US—PS 2 752 328 beschreibt Polyamide aus Terephthalsäure und Diaminen mit methylsubstituierter Kohlenwasserstoff-Kette. Die einzusetzenden Diamine mit endständigen Aminogruppen haben eine methylsubstituierte Kohlenwasserstoff-Kette von 6—8 C-Atomen, und die Gesamtzahl der C-Atome soll den Wert nicht überschreiten, den man bei Abzug der Methylgruppen von 10 erhält. Die so hergestellten Polyamide zeigen gute Textileigenschaften, z.B. in bezug auf hohe Nullfestigkeitstemperaturen und geringe Schrumpfung. Weicht man dagegen nur leicht von den zum Einsatz beanspruchten Diaminen ab (s. Spalte 6, Zeile 58—65) so zeigen die entstandenen Polyamide bzw. Fasern unerwünschte Eigenschaften.

So wird in Beispiel 11 als Diamin 5—MNDA zum Vergleich eingesetzt, die hergestellten Polyamide bzw. Fasern zeigen in siedendem Wasser eine Schrumpfung von 78%, eine Nullfestigkeitstemperatur von 160°C und eine Reißlänge von 1,9 g/Denier.

Die DE—A 23 12 218 beschreibt lineare Terephthalamidpolymere, die zumindest vorwiegend aus wiederkehrenden Einheiten der Formel

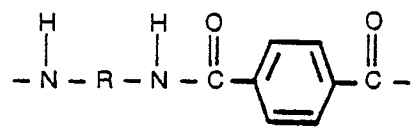

bestehen, wobei in dieser Formel R = 5-Methylnonamethylen, 2,4-Dimethyloctamethylen und 2,4,6-Trimethylheptamethylen ist, mindestens aber 50%, bevorzugt mindestens 70% und besonders bevorzugt mindestens 80% der R-Reste 5-Methylnonamethylenreste sind. Polymere, die aus wiederkehrenden Einheiten bestehen, die sich aus reinem 5-Methyl-1,9-nonandiamin-terephthalat ableiten, sollen besonders gute Eigenschaften besitzen. Obwohl gemäß dieser deutschen Offenlegungsschrift das Polymere bis zu 20 Gew.% andere wiederkehrende Struktureinheiten enthalten kann, besteht es im allgemeinen mindestens zu 90 Gew.% bevorzugt zu mindestens 95 Gew.% und besonders bevorzugt zu mindestens 98 Gew.%, aus wiederkehrenden Struktureinheiten des in vorstehender Formel charakterisierten $C_{10}$-Diaminterephthalamids. Die linearen Polymeren, die im wesentlichen aus dem in dieser Formel dargestellten $C_{10}$-Diaminterephthalamid als einzige wiederkehrende Einheit bestehen, zeichnen sich durch besonders gute Eigenschaften aus. Zu diesen Eigenschaften gehören verbesserte Werte für das Schrumpfen in siedendem Wasser, für die Nullfestigkeitstemperatur und die Reißlänge. Als linear werden hier solche Polyamide charakterisiert, die schmelzbar und in den üblichen Lösungsmitteln für Polyamide, wie m-Cresol, Ameisensäure und dergleichen löslich sind. Die Polyamide dieses Aufbaus sind entgegen der Aussage der US—PS 2 752 328 auch gut zur Herstellung von Fasern geeignet.

Ein Nachteil der in DE—OS 23 12 218 genannten Polyamide aus 5—MNDA und TS ist die relativ niedrige Glaserweichungstemperatur, die höchstens 120°C beträgt.

Sowohl für die Verwendung in Fasern und Folien beispielsweise für bestimmte technische Einsatzzwecke als auch für die Verwendung als Formmasse für warmfeste Konstruktionsteile ist es wünschenswert, die Glaserweichungstemperatur anzuheben. Dabei ist es auch ein Vorteil, wenn gleichzeitig das Polyamid transparent wird.

Gegenstand der Erfindung sind daher traansparente Polyamide mit wiederkehrenden Struktureinheiten der Formel

—HN—R—NH—OC—R'—CO—,

in der R' der Kohlenwasserstoff-Rest von Terephthalsäure oder der von Terephtalsäure und bis zu 50% Isophthalsäure ist und R zu 70—90 Mol-% aus den zweiwertigen Kohlenwasserstoff-Resten von 5-Methylnonamethylendiamin-(1,9) (a), 2,4-Dimethyloctamethylendiamin-(1,8) (b) und 2,4,6-Trimethylheptamethylendiamin-(1,7) (c), deren Molverhältnis a:b:c zwischen 1:0:0 und 0,50:0,45:0,05 liegt, zu 30—10 Mol-% aus den zweiwertigen Kohlenwasserstoff-Resten der Formeln

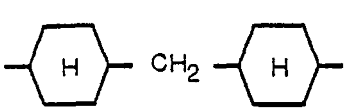 oder 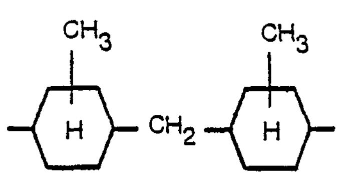 oder 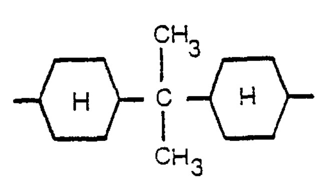

besteht. Vorzugsweise liegt das Molverhältnis a:b:c zwischen 1:0:0 und 0,80:0,15:0,05.

Es ist als Maßnahme zur Erhöhung der Glaserweichungstemperatur bekannt, einen Teil der offenkettigen Diaminkomponenten in einem Polyamid durch cyclische Diamine zu ersetzen, insbesondere durch solche Diamine, die eine unsymmetrische Strukturformel haben. So wird z.B. in der GB—PS 1 255 483 empfohlen, ausgehend von Polyamiden aus 5-Methylnonamethylendiamin (1,9) (5 MNDA) und Dicarbonsäuren, insbesondere Terephthalsäure (TS), einen Teil des 5—MNDA z.B. durch Isophorondiamin (IPD) und m-Xylylendiamin zu ersetzen. Dabei verlieren die Polyamide an Kristallinität und werden transparent.

Der teilweise Ersatz des 5—MNDA im Polyamid aus 5—MNDA und TS durch andere Diamine, darunter auch p,p'-Diaminodicyclohexylmethan (D) ist auch in der DS—OS 23 12 218 erwähnt. Dabei handelt es sich jedoch entsprechend der Glaserweichungstemperatur nur um Anteile von weniger als 5 Mol-% D vom Gesamtdiamin.

Es ist weiterhin bekannt, daß bei Ersatz aliphatischer Diamine in einem Polyamid durch cyclische Diamine zwar die Glaserweichungstemperatur stark erhöht werden kann, daß gleichzeitig aber auch die Zähigkeit abfällt, die z.B. als Kerbschlagzähigkeit nach DIN 53 453 gemessen werden kann. Gleichzeitig wird auch ein Verlust an Kristallinität festgestellt, die als Schmelzenthalpie durch DSC gemessen werden kann. Ersetzt man z.B. gemäß GB—PS 1 255 483 im Polyamid aus 5—MNDA und TS 20 Mol-% des Diamins durch IPD, so steigt in dem erhaltenen Polyamid (Produkt 1) die Glaserweichungstemperatur von 115°C auf 140°C, die Schmelzenthalpie sinkt von 11 cal/g auf 1—2 cal/g. Dieses Copolyamid ist transparent. Gegenüber dem Polyamid aus 5—MNDA und TS fällt dagegen der Wert der Kerbschlagzähigkeit von 25 kJ/m² auf 18—19 kJ/m² ab. Diese Werte entsprechen den Angaben in der GB—PS 1 255 483.

Das gleiche Verhalten sollte man erwarten, wenn man andere cyclische Diamine einsetzt. Ersetzt man jedoch im Polyamid aus 5—MNDA und TS 20 Mol-% des Diamins durch p,p'-Diaminodicyclohexylmethan, so erhält man ein Polyamid (Produkt 2), dessen Glaserweichungstemperatur auf ca. 145°C erhöht ist und dessen Schmelzenthalphie auf 1—2 cal/g gefallen ist, ganz entsprechend den Werten von Produkt 1.

Dagegen wird die Kerbschlagzähigkeit des Produktes 2 jedoch nicht erwartungsgemäß geringer, sondern sie steigt sogar um ca. 20% an.

Ein weiterer Vorteil der erfindungsgemäßen Produkte ist die Beständigkeit gegen heißes Wasser. Setzt man z.B. eine dünne Folie aus dem Produkt 2 in einem Druckgefäß 3 Stunden lang überhitztem Wasserdampf von 120°C aus, so kann man keinerlei Veränderung feststellen, während sich eine Folie aus dem Produkt 1 stark trübt und verformt. Beim 14-tägigen Lagern in heißen Wasser von 80°C wird das Produkt 1 sogar klebrig, während das Produkt 2 unverändert bleibt. Auch der Grundkörper der erfindungsgemäßen Polyamide, das Homopolyamid-5-MNDA und TS wird weder beim Sterilisieren noch beim Lagern in heißem Wasser verändert.

Entgegen dem Stand der Technik besitzen die Polyamide der Erfindung eine erhöhte Glaserweichungstemperatur im Bereich zwischen 125 und 180°C bei gleichzeitiger Erhaltung der Transparenz und gleichzeitiger Verbesserung der Kerbschlagzähigkeit. Außerdem sind sie gegen Heißwasser beständig. Aus dem bekanntgewordenen Stand der Technik kann eine solche Gesamtverbesserung nicht nahegelegt werden.

Das erfindungsgemäß eingesetzte 5-Methylnonamethylendiamin-(1,9) ist bekannt. Es wird z.B. durch Hydrierung des aus Isobuten und Acrylnitril erhältlichen Dinitrils hergestellt. Technisches 5—MNDA enthält noch isomere Produkte, wie z.B. 0—50 Mol-%, insbesondere unter 20 Mol-% bzw. 8 Mol-% 2,4-Dimethyloctamethylendiamin-(1,8), 0—12 Mol-%, insbesondere unter 1 Mol-%, 2,4,6-Trimethylheptamethylendiamin-(1,7) und als Verunreinigung verschiedene methylierte $C_{10}$-Diamine in Mengen bis allenfalls 3 Mol-%, in praxi unter 1 Mol-%. Dieses im einzelnen nicht definierte Diamin-Gemisch kann auch noch ungesättigte Diamine enthalten, so daß die Br-Zahl des Gemisches bis auf 10 ansteigen kann, bevorzugt aber unter 5 bzw. unter 1 liegt.

Die erfindungsgemäß eingesetzten cyclischen Codiamine, 4,4'-Diaminodicyclohexylmethan, 3,3'(bzw. 2,2')-Dimethyl-4,4'-diaminodicyclohexylmethan und 4,4'-Diaminodicyclohexylpropan sind Chemikalien des Handels, die gegebenenfalls durch Destillation gereinigt werden können.

Die bevorzugt eingesetzte Dicarbonsäure ist Terephthalsäure, die zu höheren Glaserweichungstemperaturen führt. Wenn jedoch für die Verarbeitung die hohe Schmelzviskosität hinderlich ist, so werden Gemische aus TS und IPS eingesetzt, die bis zu 50%, vorzugsweise 30% IPS enthalten. Bis zu 10% der aromatischen Dicarbonsäuren können durch aliphatische Dicarbonsäuren, z.B. Adipinsäure oder Decandicarbonsäure ersetzt werden, um die Schmelzviskosität herabzusetzen.

Zur Herstellung der erfindungsgemäßen Polyamide können alle bekannten Kondensationsverfahren verwendet werden.

Man kann z.B. ein Gemisch, bestehend aus Diamin(en) und Dicarbonsäure(n) oder aus Diamin(en), Dicarbonsäure(n) und Wasser, oder ein vorgebildetes Salz aus Diamin(en) und Dicarbonsäure(n) mit und ohne Wasserzusatz auf hohe Temperaturen erhitzen, wobei Wasser abdestilliert und das Polyamid entsteht. Man kann aber auch Derivate der Diamine bzw. Säuren einsetzen, z.B. Ester. Die Schmelzviskosität der Polyamide ist sehr hoch, so daß es vorteilhaft sein kann, die Kondensation in einem Extruder durchzuführen, der Entgasungsvorrichtungen hat.

Es lassen sich nach Bedarf reduzierte spezifische Viskositäten ($\eta$-red) bis zu 5 dl/g (gemessen in Kresol bei einer Konzentration von 0,5 g pro 100 Mol Lösungsmittel) und mehr einstellen.

Bevorzugt werden Polyamide mit einem $\eta$-red-Wert von 0,7—2,5. Die Einstellung erfolgt in der üblichen Weise z.B. durch Regelung des Amin- bzw. Säureüberschusses oder durch Zugabe monofunktioneller Säuren und Amine. Auch die Zugabe von Katalysatoren und Stabilisatoren und der sonstigen üblichen Hilfsmittel ist möglich.

Die hergestellten Polyamide können als Formmassen für Konstruktionsbauteile und für Fasern und Folien verwendet werden.

Beispiel 1

0,9 Mol 5-Methylnonamethylendiamin (5 MNDA), 0,1 Mol p,p'-Diaminodicyclohexylmethan (PACM) und 1,0 Mol Terephthalsäure (TS) werden in 1 l Methanol unter Rühren 2 Stunden am Rückflußkühler erhitzt. Nach Abkühlen wurde das Salz abgesaugt und getrocknet. 250 g des Salzes wurden in einem 500 ml-Dreihalskolben, der mit einem Metallrührer versehen und über eine Kolonne mit einem absteigenden Kühler verbunden war, langsam ansteigend bis auf ca. 290°C erhitzt. Nach Abdestillieren des Wassers wurde eine Schmelze erhalten, die noch 2 Stunden unter Stickstoffstrom erhitzt wurde. Nach Abkühlen wurde das Glas abgeschlagen und das Polymerisat zerkleinert. Die reduzierte spezifische Viskosität ($\eta$-red) betrug 1,6 dl/g. Es wurde eine Glaserweichungstemperatur (Tg) von 130°C und eine Kerbschlagzähigkeit nach DIN 53 453 von 27 kJ/m$^2$ gemessen.

Beispiel 2

In einem 1 l Rührkessel aus $V_4$A-Stahl werden

| | |
|---|---|
| 139,5 g | (~80 Mol-%) eines $C_{10}$-Diamingemisches, das zu 64,0% aus 5—MNDA, 34,0% aus 2,4-Dimethyloctandiamin-(1,8), 1,2% aus 2,4,6-Trimethylheptandiamin-(1,7) besteht und noch kleine Mengen nicht identifizierter Nebenprodukte enthält, |
| 42,5 g | PACM (~20 Mol-%) |
| 49,8 g | IPS |
| 116,3 g | TS |
| 0,6 g | Essigsäure |
| 100,0 g | Wasser |

unter Ausschluß von Sauerstoff 1 Stunde lang auf 240°C erhitzt, wobei sich ein Druck von ca. 20 bar einstellt. Dann wird unter Rühren und weiterer Temperatursteigerung bis auf 290°C das Wasser abdestilliert. Nach weiteren 2 Stunden bei dieser Temperatur wird das Produkt unter Stickstoffdruck durch das Bodenventil abgelassen. Es werden folgende Werte gemessen:

$\eta$-red = 1,7 dl-g; Tg = 145°C
Kerbschlagzähigkeit (DIN 53 453) = 28 kJ/m$^2$

Beispiel 3

In einem 1 l Rührkessen aus $V_4$A-Stahl werden

| | |
|---|---|
| 139,2 g | 5—MNDA (~80 Mol-%) |
| 42,6 g | PACM (~20 Mol-%) |
| 194,2 g | TS-Dimethylester |
| 200,0 g | Wasser |

3 Stunden unter Rühren am Rückfluß gekocht. Danach wird über eine Kolonne das abgespaltene Methanol und anschließend die Hauptmenge des Wassers abdestilliert. Der Kessel wird dann verschlossen und unter Druck auf 240°C erhitzt. Unter weiterer Temperaturerhöhung bis auf 290°C wird

dann der Rest des Wassers abdestilliert und nach 1 Stunde bei dieser Temperatur des Produkt unter Stickstoffdruck durch das Bodenventil abgelassen.

Es wurden folgende Werte gemessen:

$\eta$-red = 1,4 dl/g; Tg = 150°C
Kerbschlagzähigkeit nach DIN 53 453: 30 kJ/m²

Beispiel 4

In einem 1 l Rührkessel aus $V_4A$-Stahl werden

| | |
|---|---|
| 121,8 g | (~70 Mol-%) eines Diamingemisches, bestehend aus 88% 5 MNDA und 12% 2,4-Dimethyloctandiamin-(1,8) |
| 63,9 g | PACM (~30 Mol-%) |
| 132,9 g | TS |
| 33,2 g | IPS |
| 200,0 g | Wasser |

1 Stunde lang unter Rühren auf 220°C erhitzt. Dann wird das Wasser langsam abdestilliert. Wenn der Druck auf 20 bar gefallen ist, wird unter Temperaturhöhung weiter abdestilliert, bis 295°C erreicht sind. Bei dieser Temperatur wird noch 1 Stunde verweilt, danach das Produkt unter Stickstoffdruck durch das Bodenventil abgelassen.

Es wurden folgende Werte gemessen:

$\eta$-red = 1,2 dl/g; Tg = 160°C
Kerbschlagzähigkeit nach DIN 53 453: 26 kJ/m²

Beispiel 5

In einem 1 l Rührkessel aus $V_4A$-Stahl werden

| | |
|---|---|
| 130,5 g | (~75 Mol-%) eines $C_{10}$-Diamingemisches, das zu 98,5% aus 5—MNDA und zu 1,5% aus 2,4 -Dimethyloctamethylendiamin-(1,8) besteht, |
| 53,0 g | PACM (~ 25 Mol-%) |
| 166,0 g | TS |
| 100,0 g | Wasser |

1 Stunde lang auf 220°C erhitzt Dann wird das Wasser langsam abdestilliert. Wenn der Druck auf 20 bar gefallen ist, wird unter Temperaturerhöhung weiter abdestilliert, bis 295°C erreicht sind. Bei dieser Temperatur wird noch 1 Stunde verweilt, danach das Produkt unter Stickstoffdruck durch das Bodenventil abgelassen.

Es wurden folgende Werte gemessen:

$\eta$-red = 1,4 dl/g; Tg = 155°C
Kerbschlagzähigkeit nach DIN 53 453: 27 kJ/m²

Beispiel 6

In einem 1 l Rührkessel werden

| | |
|---|---|
| 158,0 g | (~80 Mol-%) eines Diamingemisches, bestehend aus 88% 5—MNDA und 12% 2,4-Dimethyloctamethylendiamin-(1,8) |

| | | |
|---|---|---|
| 24,0 g | PACM | ~20 Mol-% |
| 28,0 g | 3,3'-Dimethyl-4,4'-diaminodicyclohexylmethan | |
| 192,0 g | TS | |
| 100,0 g | Wasser | |
| 0,2 g | phosphorige Säure | |

1 Stunde lang unter Rühren auf 230°C erhitzt. Dann wird das Wasser abdestilliert. Wenn der Druck auf 15 bar abgefallen ist, wird unter Temperaturerhöhung weiter destilliert, bis das Produkt eine Temperatur von 297°C angenommen hat und Druck auf 0 gefallen ist. Nach einer weiteren halben Stunde wird das Produkt unter Stickstoffdruck abgelassen.

Es wurden folgende Werte gemessen:

$\eta$-red = 1,4 dl/g; Tg = 160°C
Kerbschlagzähigkeit nach DIN 53 453: 25 kJ/m²

Beispiel 7

In einem 1 l Rührkessel werden

| | | |
|---|---|---|
| 158,0 g | (~79 Mol-%) eines Diamingemisches, bestehend aus 88% MNDA und 12% 2,4-Dimethyloctandiamin-(1,8) | |
| 24,0 g | PACM | ~20 Mol-% |
| 28,0 g | Bis-(4'-Aminocyclohexyl)2,2-propan | |
| 192,0 g | TS | |
| 100,0 g | Wasser | |
| 0,2 g | phosphorige Säure | |

1 Stunde lang unter Rühren auf 230°C erhitzt. Dann wird das Wasser abdestilliert. Wenn der Druck auf 15 bar abgefallen ist, wird unter Temperaturerhöhung weiter destilliert, bis das Produkt eine Temperatur von 300°C angenommen hat und der Druck auf 0 gefallen ist. Nach einer weiteren halben Stunde wird das Produkt unter Stickstoffdruck abgelassen.

Es wurden folgende Werte gemessen:

$\eta$-red = 1,5 dl/g; Tg = 165
Kerbschlagzähigkeit nach DIN 53 453: 27 kJ/m²

**Patentansprüche**

1. Transparente Polyamide mit wiederkehrenden Struktureinheiten der Formel

—HN—R—NH—OC—R'—CO—,

in der R' der Kohlenwasserstoff-Rest von Terephthalsäure oder der von Terephthalsäure und bis zu 50% Isophthalsäure ist und R zu 70—90 Mol-% aus den zweiwertigen Kohlenwasserstoff-Resten von 5-Methylnonamethylendiamin-(1,9) (a), 2,4-Dimethyloctamethylendiamin-(1,8) (b) und 2,4,6-Trimethylheptamethylendiamin-(1,7) (c), deren Molverhältnis a:b:c zwischen 1:0:0 und 0,50:0,45:0,05 liegt, zu 30—10 Mol-% aus den zweiwertigen Kohlenwasserstoff-Resten der Formeln

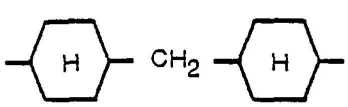 oder 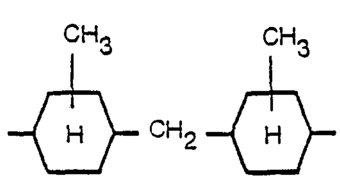 oder 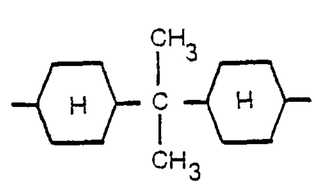

besteht.

2. Transparente Polyamide nach Anspruch 1, in denen der Rest R′ der Kohlenwasserstoffrest von Terephthalsäure und 30% Isophthalsäure ist und das Molverhältnis a:b:c zwischen 1:0:0 und 0,80:0,15:0,05 liegt.

3. Transparente Polyamide nach den Ansprüchen 1 und 2, bei denen bis zu 10% der aromatischen Dicarbonsäuren durch aliphatische Dicarbonsäuren ersetzt sind.

4. Transparente Polyamide nach Anspruch 3, in denen die aliphatische Dicarbonsäure Adipinsäure oder Decandicarbonsäure ist.

**Revendications**

1. Polyamides transparents caractérisés en ce qu'ils sont constitués d'éléments structurels qui se répètent, répondant à la formule:

—HN—R—NH—OC—R′—CO—

où R′ est le reste hydrocarbure de l'acide téréphtalique seul, ou celui de l'acide téréphtalique et de l'acide isophtalique en proportion pouvant aller jusq'à 50%, et R est constitué, pour 70 à 90 mol% des restes hydrocarbure bivalents de 5-méthylnonaméthylènediamine-(1,9) (a), de 2,4-diméthyl-octaméthylènediamine-(1,8) (b), et de 2,4,6-triméthylheptaméthylènediamine-(1,7) (c), dont le rapport moléculaire a:b:c se situe entre 1:0:0 et 0,50:0,45:0,05, et pour 30 à 10 mol% de restes hydrocarbures bivalents répondant aux formules:

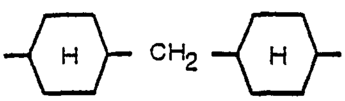 ou 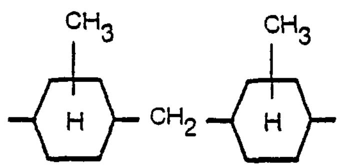 ou 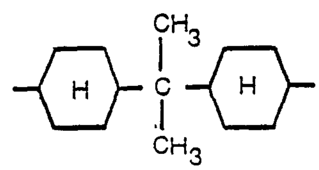

2. Polyamides transparents suivant la revendication 1, caractérisés en ce que le reste R′ est le reste hydrocarbure de l'acide téréphtalique et de 30% d'acide isophtalique, et le rapport moléculaire a:b:c se situe entre 1:0:0 et 0,80:0,15:0,05.

3. Polyamides transparents suivant l'une des revendications 1 et 2, caractérisés en ce que l'on remplace jusqu'à 10% des acides dicarboxyliques aromatiques par des acides dicarboxyliques aliphatiques.

4. Polyamides transparents suivant la revendication 3, caractérisés en ce que l'acide dicarboxylique aliphatique est l'acide adipique ou l'acide décanedicarboxylique.

**Claims**

1. Transparent polyamides having recurring structural units of the formula

—HN—R—NH—OC—R′—CO—

where R′ is the hydrocarbon radical of terephthalic acid alone or of terephthalic acid and up to 50% of isophthalic acid and R consists, to the extent of 70—90 mol%, of the divalent hydrocarbon radicals of 5-methylnonamethylene-1,9-diamine (a), 2,4-dimethyloctamethylene-1,8-diamine (b) and 2,4,6-trimethylheptamethylene-1,7-diamine (c), whose molar ratio a:b:c lies between 1:0:0 and 0.50:0.45:0.05, and, to the extent of 30—10 mol%, of the divalent hydrocarbon radicals of the formulae

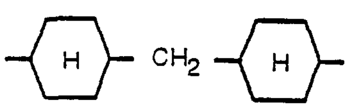 or 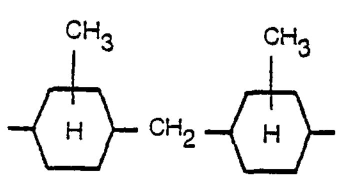 or 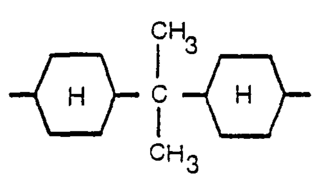

2. Transparent polyamides according to Claim 1, in which the radical R′ is the hydrocarbon radical of terephthalic acid and 30% of isophthalic acid and the molar ratio a:b:c is between 1:0:0 and 0.80:0.15:0.05.

3. Transparent polyamides according to Claims 1 and 2 in which up to 10% of the aromatic dicarboxylic acids are replaced by aliphatic dicarboxylic acids.

4. Transparent polyamides according to Claim 3, in which the aliphatic dicarboxylic acid is adipic acid or decanedicarboxylic acid.